# EUROPÄISCHE PATENTSCHRIFT

(11) **EP 4 611 952 B1**
(45) Veröffentlichungstag und Bekanntmachung des Hinweises auf die Patenterteilung: **29.07.2026**
(21) Anmeldenummer: 24820282.2
(22) Anmeldetag: 28.11.2024
(51) Int. Cl.: B21K 1/06

(54) **ROHRSTABILISATOR**
TUBULAR STABILISER BAR
BARRE STABILISATRICE TUBULAIRE

(30) Priorität: 07.12.2023 DE 102023134287
(43) Veröffentlichungstag der Anmeldung: 10.09.2025
(73) Patentinhaber: thyssenkrupp Federn und Stabilisatoren GmbH, 58119 Hagen (DE); thyssenkrupp AG, 45143 Essen (DE)
(72) Erfinder: SCHAPER, Malte, 59755 Arnsberg (DE); BERNARD, Sebastian, 51789 Lindlar (DE)
(74) Vertreter: thyssenkrupp Intellectual Property GmbH
(86) Internationale Anmeldenummer: PCT/EP2024/084010
(87) Internationale Veröffentlichungsnummer: WO 2025/119777

(56) Entgegenhaltungen:
- JP-A- 2007 320 408
- US-A1- 2017 028 808
- US-A1- 2019 030 980
- US-B1- 6 547 894
- US-B2- 11 786 960

## Beschreibung

Die Erfindung bezieht sich auf die Fertigung von Rohrstabilisatoren, insbesondere Rohrstabilisatoren für Kraftfahrzeuge mit zu einem Stabilisatorblatt umgeformten Rohrende.

Die herkömmliche Endenbearbeitung eines Rohrstabilisators sieht typischerweise den folgenden Prozessfluss vor: Die Rohrenden werden zunächst induktiv (einseitig nacheinander oder beidseitig parallel) erwärmt, beispielsweise auf einen Temperaturbereich von 650-1200°C. Die Temperatur ist abhängig von verschiedenen geometrischen und kundenspezifischen Anforderung, wie beispielsweise Maßhaltigkeiten, Härtewerten, Lebensdaueranforderungen, etc.. Anschließend erfolgt eine mechanische Pressenbearbeitung, wobei das erwärmte Stabende in aufeinanderfolgenden Schritten zum Ausbilden des Stabilisatorblatts warmumgeformt ("geplättet"), das ausgebildete Stabilisatorblatt gelocht und optional geschnitten und abschließend die Blattflächen hinsichtlich geforderter/benötigter Ebenheiten und Parallelitäten kalibriert werden. Optional ist zwischen dem Warmumformen und dem Lochen/Schneiden eine Biegeoperation des umgeformten Stabilisatorblatts möglich. Damit ist jedoch nicht ausgeschlossen, dass der Schmiedeprozess, d.h. das Umformen, zukünftig auch kalt, d.h. bei einer Temperatur unter 650°C, insbesondere bei Raumtemperatur, erfolgen kann.

Untersuchungen haben ergeben, dass die Blattenden nach dem Warmumformprozess ("Plätten") i. d. R. nahezu spaltfrei sind (wenige µm) und damit nahezu flüssigkeitsdicht sind. Ohne einen Stoffschluss ist jedoch eine Kapillarwirkung nicht zu vermeiden, wodurch dennoch (vernachlässigbar) geringe Mengen Feuchtigkeit in den Rohrstabilisator eindringen kann. Durch den mechanischen und werkzeuggebundenen Folgeprozess des Lochens/Schneidens wird das Auseinanderziehen beider Blattflächen durch Reibeffekte begünstigt, wodurch der Spalt zwischen beiden Blattflächen vergrößert wird und die Dichtigkeit weiter reduziert wird. Die Folgen eines Spaltes sind einerseits ein möglicher Eintritt von korrosiven Fluiden, beispielsweise Wasser, sonstige Prozessmedien wie z.B. Vorbehandlung im Lackierprozess, Gase wie z.B. Sauerstoff, etc., welche spätere Ausgangspunkte für Korrosionsbildung an der Innenoberfläche des Stabilisators darstellen. Das Versagen des Bauteils wird somit durch etwaige korrosionsbedingte Materialschäden begünstigt. Zum anderen treten weitere Qualitätsmängel während des Lackierprozesses auf, da austretende Fluide die Beschichtung am Blattende während des Pulverlackierens und Einbrennens negativ beeinflussen können. Folglich soll das Eindringen und Austreten von (korrosiven) Fluiden in den ungeplätteten Rohrbereich und aus dem ungeplätteten Rohrbereich am Blattende verhindert werden.

Verschiedene Verfahren zum Abdichten sind bereits bekannt. So offenbart beispielsweise US 6 547 894 B1 das Einbringen eines Schmelzschweißpulvers wie Natriumtetraborat zwischen die Blattflächen. Durch Erhitzen schmilzt das Pulver und verbindet beide aufeinander umgeformte, geplättete Blattflächen miteinander. Es hat sich jedoch herausgestellt, dass das Applizieren des Schmelzschweißpulvers, und somit das gesamte Verfahren, nicht zuverlässig automatisierbar ist. Ferner ist Natriumtetraborat durch seinen Bor-Anteil nachweislich gesundheitsgefährdend für den Menschen. Alternative Verfahren zum Abdichten des Rohrstabilisators konnten bislang keine zuverlässige Dichtigkeit des Rohrstabilisators herstellen.

US 2019/0030980 A1, welche die Basis für den Oberbegriff der Ansprüche 1, 7 und 15 bildet, offenbart, dass an einem Endabschnitt einer aus Stahl hergestellten Hohlstange ein abschließender Dichtungsabschnitt ausgebildet ist.

US 2017/0028808 A1 offenbart ein rohrförmiges Element, dessen Endabschnitte geschlossen sind und ein Verfahren zum Verschließen der Endabschnitte des rohrförmigen Elements.

JP 2007 320408 A offenbart einen Hohlstabilisator.

US 11 786 960 B2 offenbart ein Verfahren zum Herstellen eines Stabilisators.

Die Aufgabe der vorliegenden Erfindung besteht deshalb darin, ein verbessertes Konzept für Rohrstabilisatoren zu schaffen.

Die Aufgabe wird durch den Gegenstand der unabhängigen Patentansprüche gelöst. Weitere vorteilhafte Ausführungsformen sind der Gegenstand der abhängigen Patentansprüche.

Ausführungsbeispiele zeigen einen Rohrstabilisator mit einem zu einem Stabilisatorblatt umgeformten Rohrende, so dass der Rohrstabilisator einen Rohrabschnitt, das Stabilisatorblatt und einen Übergangsbereich zwischen Rohrabschnitt und Stabilisatorblatt aufweist. Der Rohrstabilisator kann einen (Feder-) Stahl aufweisen oder überwiegend aus einem Stahl, insbesondere einem Federstahl, bestehen. Als Federstähle eignen sich beispielsweise 26MnB5, 34MnB5, 40MnB5. Generell eignen sich jedoch alle schweißbaren Werkstoffe.

Ferner weist der Rohrstabilisator eine Schweißnaht im Bereich des Übergangsbereichs oder des Stabilisatorblatts auf, um einen Gas- und/oder Flüssigkeitsaustausch zwischen Innenrohr (d.h. dem Rohrabschnitt) und der Umgebung zu vermeiden, wobei die Schweißnaht in Abwesenheit eines Schweißzusatzstoffs gebildet ist. Schweißzusatzwerkstoffe werden üblicherweise in Form von Pulvern, Stäben oder Drähten zugeführt, abgeschmolzen und erstarren in der Fuge zwischen den Fügepartnern, um so die Verbindung zu erzeugen. Ohne Schweißzusatzstoff wird die Schweißnaht ausschließlich durch Aufschmelzen der Materialien, hier der beiden Blattflächen, hergestellt, so dass die beiden Materialien verschmelzen.

Somit entfällt der schlecht automatisierbare Schritt, den Schweißzusatzstoff zu applizieren. Von den Schweißzusatzstoffen abzugrenzen sind Schweißhilfsstoffe wie Schutzgase, Flussmittel, Vakuum (z.B. beim Elektronenstrahlschweißen), Pasten oder Schweißpulver, die das Schweißen erleichtern oder auch erst möglich machen. Das Schweißpulver wird z.B. beim Unterpulverschweißen verwendet und ist nicht mit Schmelzschweißpulver als Schweißzusatzstoff zu verwechseln. Beispiele für Schweißverfahren, die ohne Schweißzusatzstoffe angewendet werden, sind Tiefschweißen bzw. Lasertiefschweißen (kurz Laserschweißen), Wärmeleitungsschweißen, Widerstandsschweißen, Laserstrahl-MSG-Hybrid-Schweißen, Laserschweißen im Vakuum, Laserdurchstrahlschweißen, Gasschmelzschweißen, Lichtbogenhandschweißen, Schutzgasschweißen, Unterpulverschweißen, Elektronenstrahlschweißen, Feuerschweißen, Kaltpressschweißen, Reibschweißen, Sprengschweißen, Elektromagnetisches Pulsschweißen, Diffusionsschweißen, MBP-Schweißen, Lichtbogenbolzenschweißen oder Auftragsschweißen. D.h., die Schweißnaht kann mit einem der genannten Schweißverfahren oder einer beliebigen Kombination hiervon erzeugt werden.

Selbstverständlich ist es möglich, statt einer einzelnen Schweißnaht auch mehrere Schweißnähte vorzusehen. Ferner kann die Schweißnaht in verschiedenen Varianten ausgebildet sein, deren Ausführungen in verschiedensten Kriterien variieren. Folgende Kriterien sind an dieser Stelle beispielhaft zu nennen: Anordnung bzw. Position (Position der Schweißnaht/Schweißnähte auf dem Blatt/Anordnung der Schweißnähte zueinander), Form (Schweißnahtbreite, Schweißnahthöhe, gerade gezogene Schweißnaht, halbrund gezogene Schweißnaht, wellig gezogene Schweißnaht, beliebig geformte gezogene Schweißnaht, etc.), Ausführungsart (einlagige oder mehrlagige Schweißnaht).

Idee ist es somit, einen händischen aber auch automatisierbaren Schweißprozess für das Rohrende des Rohrstabilisators zu schaffen. Die beiden Blattflächen werden in Richtung des nicht umgeformten Rohrquerschnitts vollständig stoffschlüssig und dicht miteinander verbunden. Daraus folgt außerdem der Entfall eines Qualitätsmangels aufgrund von mangelhafter Lackhaftung durch Fluide, die aus dem Rohrstabilisator während des Lackierprozesses austreten können. Ferner entfällt die Zugabe von Konservierungsmedien im Rohrstabilisator zum Schutz der Innenoberfläche vor Korrosion. Ferner bietet der Schweißprozess den Vorteil, dass der Rohrstabilisator auch bei Unter- bzw. Überdruckbedingungen fluiddicht verschlossen ist. Dies ist z.B. bei wechselnden Außentemperaturen im Betrieb als auch z.B. während der Fertigung bei einem Vergüteprozess vorteilhaft. Beim Vergüteprozess wird der Rohrstabilisator nach dem Erhitzen in einem Abschreckmedium abgeschreckt, wodurch sich schnell große Temperatur- und somit auch Druckunterschiede durch das eingeschlossene Luftvolumen im Rohrstabilisator einstellen. Auch unter diesen Bedingungen soll der Rohrstabilisator weiter fluiddicht verschlossen sein.

Ein weiterer vorteilhafter Effekt des Schweißens ist die bessere Spannungsverteilung im Stabilisatorblatt gegenüber einem ungeschweißten Stabilisatorblatt. Hieraus ergibt sich die Möglichkeit, bei gleicher Lebensdauer Material einzusparen oder eine längere Lebensdauer des Rohrstabilisators zu erhalten.

Bevorzugt ist die Schweißnaht mittels Laserschweißen gebildet. Laserschweißen hat den Vorteil, dass die Energie mittels eines durch eine Optik gebündelten Laserstrahls in das Material eingebracht wird. Durch automatisierbares Wechseln der Optik sind demnach z.B. unterschiedlich breite und unterschiedlich Tiefe Schweißnähte realisierbar. Ferner können so die Taktzeiten, d.h. die Zeit bis zur Herstellung der Schweißnaht, eingestellt werden, wenn die Energie mehr oder weniger gebündelt auf das Material einwirkt. Ebenso ist die Laserleistung einstellbar und, z.B. auf verschiedene Blattdicken, anpassbar. Somit kann die Schweißnaht in Kenntnis des zu schweißenden Rohrstabilisators automatisch z.B. an ein Material oder eine Wanddicke des Rohrstabilisators angepasst werden. Die in dieser Offenbarung beschriebenen automatisierten Schritte können von einer Recheneinheit, d.h. einem Computer, durchgeführt werden.

In Ausführungsbeispielen ist die Schweißnaht kopfseitig, bevorzugt über die gesamte Breite des Stabilisatorblatts, auf dem Stabilisatorblatt ausgeführt. Somit ist es nicht notwendig, zum Aufschmelzen beider Blattflächen, zunächst die obere Blattfläche zu durchdringen, um Material der unteren Blattfläche zu verflüssigen. Kopfseitig sind beide Blattflächen sichtbar und können gleichzeitig aufgeschmolzen werden. Somit wird weniger Energie für das Schweißen benötigt und der Schweißvorgang ist schneller abgeschlossen. Vorteilhaft ist es dann jedoch, wenn ein Durchbruch (auch als Bohrung bezeichnet) durch das Stabilisatorblatt, der zur Befestigung des Rohrstabilisators an dem Fahrwerk dienen kann, ebenfalls eine lateral (bevorzugt vollständig) umlaufende weitere Schweißnaht aufweist, die innerhalb des Durchbruchs angeordnet ist. Somit kann der Schnittspalt des Durchbruchs abgedichtet werden.

Um eine überstehende Schweißnaht in der Bohrung oder auch an einer beliebigen Außenseite des Stabilisatorblatts zu vermeiden, kann es vorteilhaft sein, die Bohrung bzw. generell den Beschnitt nicht identisch durchgängig auszuführen, sondern z.B. konisch oder mit einem Absatz um die Trennebene der Blattflächen zu versehen. Somit wird, im Bereich von wenigen Zehntel Millimeter, Platz für die Schweißnaht geschaffen, ohne die Toleranzanforderungen zu verletzen, so dass z.B. die Anschraubung nicht beeinträchtigt wird. Ergänzend oder alternativ kann der Bereich der späteren Schweißnaht im Bereich der Trennebene oder der Oberfläche des Stabilisatorblatts nachträglich, z.B. mit einem Laser, bearbeitet werden, um Material für die Schweißnaht abzutragen und ein Überstand der Schweißnaht zu vermeiden.

Sind alle offenen Stellen des Rohrstabilisators an einem Ende vollständig abgedichtet, so kann, zumindest von einer Seite, keine Flüssigkeit eindringen. Vorteilhafterweise sind ferner beide Seiten des Rohrstabilisators entsprechend mittels der Schweißnaht abgedichtet. Beispielsweise sind beide Enden des Rohrstabilisators symmetrisch bzw. gleichartig ausgeführt.

Ergänzend oder alternativ kann der Durchbruch durch das Stabilisatorblatt gegenüber dem Übergangsbereich bzw. gegenüber dem Rohrabschnitt abgedichtet sein. Dies kann beispielsweise mittels lateral auf dem Stabilisatorblatt oder dem Übergangsbereich ausgeführter Schweißnaht erfolgen. Die Schweißnaht ist in diesem Fall zwischen dem Rohrabschnitt und dem Durchbruch angeordnet. Bevorzugt erstreckt sich die Schweißnaht über die gesamte Breite des Stabilisatorblatts bzw. des Übergangsbereichs. Es ist allerdings auch möglich, die Abdichtung des Blattendes durch mehrere Schweißnähte zu erreichen, wobei sich nicht alle Schweißnähte über die gesamte Breite des Stabilisatorblatts erstrecken brauchen. Beispielsweise kann das Loch innen umlaufend mit einer Schweißnaht abgedichtet sein.

Generell ist es möglich, mindestens eine Schweißnaht entweder zwischen Übergangsbereich und Durchbruch, zwischen Blattende und dem Durchbruch, um den Durchbruch, bzw. direkt umlaufend am Schnittspalt des Durchbruchs oder am Endenbeschnitt in diversen Geometrien und Nahtbreiten und sonstigen Ausführungsformen einzeln, mehrfach oder in beliebiger Kombination einzubringen. Dieser Lösungsansatz bietet den Vorteil einer stoffschlüssigen Verbindung der beiden aufeinandergepressten Blattflächen und gewährleistet somit eine vollkommene Dichtigkeit des Stabilisatorendes.

Ferner ist ein Verfahren zur Herstellung eines kaltgebogenen Rohrstabilisators mit folgenden Schritten offenbart a) Schmieden eines Rohrs, um ein geschmiedetes Rohr zu erhalten; b) Biegen des geschmiedeten Rohrs, um einen Rohrstabilisator zu erhalten; c) Vergüten des gebogenen Rohrs, um einen vergüteten Rohrstabilisator zu erhalten; - wobei das Schmieden des Rohrs folgende Schritte umfasst: a1) Plätten eines Endes des Rohrs, so dass das geschmiedete Rohr einen Rohrabschnitt, ein Stabilisatorblatt und einen Übergangsbereich zwischen Rohrabschnitt und Stabilisatorblatt aufweist; und a2) Erstellen einer Schweißnaht im Bereich des Übergangsbereichs oder des Stabilisatorblatts, um den Rohrabschnitt gegen gegen Flüssigkeits- und/oder Gasaustausch mit der Umgebung abzudichten. Optional kann das Schmieden nach dem Plätten und vor dem Schweißen weiteren Prozessschritte wie z.B. das Lochen und/oder Schneiden des Stabilisatorblattes und/oder das Kalibrieren des Stabilisatorblattes umfassen.

Beispielhaft können die Verfahrensschritte a), b) und c) in alphabetischer Reihenfolge, d.h. in der Prozessreihenfolge a), b) und c) ausgeführt werden. Alternativ ist es möglich, dass die Verfahrensschritte a), b) und c) in der Prozessreihenfolge b), c), a) ausgeführt werden.

Kaltgebogene Rohrstabilisatoren werden derzeit üblicherweise nach der Formgebung stückvergütet oder chargenvergütet und im Anschluss werden die Stabilisatorblätter angeschmiedet d.h. insbesondere die Enden geplättet (siehe auch Beschreibung im einleitenden Teil). Hierdurch ergibt sich für das Schmieden eine geringere Effizienz insbesondere aufgrund des aufwendigen Handlings der bereits gebogenen Stabilisatoren.

Durch das zuverlässige Abdichten der Rohrenden wird es nunmehr möglich, den Prozessfluss derart abzuändern, dass das Schmieden mit dem Plätten und dem Abdichten des zu dem Stabilisatorblatt geplätteten Rohrstabilisatorendes, vor dem Vergüten und somit auch vor dem Biegen des Rohrstabilisators erfolgen kann (Prozessreihenfolge: a), b), c)). Das Eindringen des Abschreckmediums beim Vergüten wird durch das abgedichtete Ende des Rohrstabilisators zuverlässig verhindert. Durch die Änderung des Ablaufs sind erhebliche Effizienzsteigerungen, insbesondere im Schmiedeprozess, zu erwarten. Anstelle der aufwendigen Handhabung gebogener, vergüteter Rohre, üblicherweise mittels eines (i.d.R. stationären) Industrieroboters, kann hierbei das gerade Rohr über ein Lineartaktsystem den möglichen, unterschiedlichen Schmiedestufen parallel zugeführt werden. Das Verschließen lässt sich, beispielsweise in Form eines Schweißprozesses, ebenfalls in diesen Prozessschritt integrieren. Sofern es sich herausstellt, dass es weitere Verfahren gibt, die ein zuverlässiges, automatisiertes Abdichten der Rohrenden ermöglicht, sind diese möglicherweise ebenso geeignet wie der Schweißprozess.

Aber auch für den klassischen Prozessablauf beim Kaltbiegen (Prozessreihenfolge b), c), a)) hat das Abdichten der Rohrenden Vorteile. So kann verhindert werden, dass im eingebauten Zustand im Fahrzeug oder auch im weiteren Herstellungsprozess beispielsweise korrosive Fluide, wie z.B. Prozessmedien, die beispielsweise bei der Vorbehandlung im Lackierprozess verwendet werden, in den Rohrstabilisator eindringen können.

Optional umfasst das Verfahren ferner den Schritt d) Strahlen des vergüteten Rohrstabilisators, um einen gestrahlten Rohrstabilisator zu erhalten. Durch das Strahlen, beispielsweise Kugelstrahlen, werden die Druckeigenspannungen in der Oberfläche eingestellt. Ferner kann die Oberfläche aufgeraut werden, so dass in einem weiteren optionalen Schritt e) Lackieren des gestrahlten Rohrstabilisators, um einen lackierten Rohrstabilisator zu erhalten, der Lack besser an dem Rohrstabilisator haftet.

In Ausführungsbeispielen weist der Rohrstabilisator zu Beginn des Erstellens der Schweißnaht in Schritt a2) eine Temperatur auf, die zumindest 20°C bevorzugt zumindest 50°C höher ist, als die Umgebungstemperatur. Insbesondere weist der Rohrstabilisator eine Temperatur von mindestens 100°C, mindestens 175°C oder mindestens 250°C auf. Es hat sich herausgestellt, dass sich die Wärme des Rohrstabilisators positiv auf das folgende Schweißen auswirkt. Die positive Auswirkung bezieht sich beispielsweise auf die Geschwindigkeit, mit der die Schweißnaht erstellt werden kann und/oder auf die benötigte Energie zum Erstellen der Schweißnaht und/oder auf die Güte, d.h. die Qualität, der Schweißnaht.

Beispielsweise kann so der Ausschuss der Rohrstabilisatoren bei der Fertigung durch undichte Schweißnähte reduziert werden. Die Temperatur des Rohrstabilisators kann durch Erwärmen in einem separaten Prozessschritt, z.B. mittels konduktiver Erwärmung oder in einem Ofen oder mittels induktiver Erwärmung, erfolgen. Ergänzend oder alternativ ist es möglich, die Restwärme der vorangegangenen Endenbearbeitung des Rohrstabilisators auszunutzen. Insbesondere unter Ausnutzung der Restwärme ist es auch möglich, dass das Stabilisatorblatt deutlich höhere Temperaturen als 250°C aufweist, beispielsweise mehr als 350°C, mehr als 400°C oder mehr als 450°C. Letzteres ist natürlich vorteilhaft, da somit keine zusätzliche Energie (Wärme) zugeführt werden braucht, die nicht sowieso benötigt wird. Dann ist jedoch auf eine zügige Verarbeitung der Rohrstabilisatoren zu achten, um die für das Warmumformen eingebrachte Restwärme bis zum Schweißen nutzen zu können.

Weiter optional kann nach dem Erstellen der Schweißnaht in Schritt a2) ein Schritt a3) vorgesehen sein, der eine thermische Nachbehandlung zumindest eines Bereichs um die Schweißnaht umfasst. D.h. es kann nach dem Schweißprozess eine thermische Nachbehandlung des Blattes oder zumindest der Wärmeeinflusszone durchgeführt werden. Die thermische Nachbehandlung kann einer möglichen Gefügeveränderung durch das Schweißen entgegenwirken.

Optional kann nach dem Schweißprozess eine mechanische Nachbearbeitung des Blattes erfolgen. Beispielsweise können die Seiten-, Stirn- und Blattflächen in einem nachgeschalteten Prozess, z.B. durch Schneiden und/oder Schleifen der Kanten, angeglichen werden.

Der Prozessfluss des Schmiedens kann sich aus den nachfolgenden Arbeitsschritten zusammensetzen: Plätten des Rohrendes zu einem Stabilisatorblatt bzw. Rohrstabilisatorblatt, optional Blattbiegung, Lochen des Blattes und optional Beschnitt der Blattflächen (d.h. insbesondere der Kanten der Blattenden), Kalibrieren des Rohrstabilisators, (Laser-) Schweißen.

Ferner ist ein Verfahren zur Herstellung eines warmgebogenen Rohrstabilisators mit folgenden Schritten offenbart: a) Schmieden eines Rohrs um ein geschmiedetes Rohr zu erhalten, b) Erhitzen des geschmiedeten Rohrs auf eine Temperatur oberhalb der Austenitisierungstemperatur des Rohrs, um ein erhitztes Rohr zu erhalten, c) Biegen des erhitzten Rohrs ein gebogenes Rohr in der Form des Rohrstabilisators zu erhalten; d) Abschrecken des gebogenen Rohrs um ein gehärtetes, gebogenes Rohr zu erhalten; e) Anlassen des gehärten, gebogenen Rohrs, um den Rohrstabilisator zu erhalten; wobei das Schmieden des Rohrs folgende Schritte umfasst: a1) Plätten eines Endes des Rohrs, so dass das geschmiedete Rohr einen Rohrabschnitt, ein Stabilisatorblatt und einen Übergangsbereich zwischen Rohrabschnitt und Stabilisatorblatt aufweist; und a2) Erstellen einer Schweißnaht im Bereich des Übergangsbereichs oder des Rohrblatts, um den Rohrabschnitt gegen einen Flüssigkeits- und/oder Gasaustausch mit der Umgebung abzudichten.

Die Ausführungsbeispiele des Verfahrens zur Herstellung eines kaltgebogenen Rohrstabilisators sind auf das Verfahren zur Herstellung eines warmgebogenen Rohrstabilisators übertragbar.

Für warmgebogene Stabilisatoren ist es üblich, diese vor der Formgebung zu schmieden. Beim Warmbiegen erfolgt parallel zum Biegen die Vergütung des Rohrstabilisators. Die Stabilisatoren werden in einem erhitzten Zustand oberhalb der Austenitisierungstemperatur gebogen und dann, z.B. in einem Ölbecken, abgeschreckt und anschließend, z.B. in einem Ofen, angelassen. Die Effizienz im Schmiedeprozess ist hierbei erheblich höher.

Sowohl beim Kaltbiegen als auch beim Warmbiegen ist es von Vorteil, wenn die Stabilisatorblätter fluiddicht verschlossen sind. So kann das nach dem Vergüten notwendige Abschrecken in beiden Fällen nach dem Schmieden erfolgen, ohne dass das Abschreckmedium in den Rohrstablisator eindringt und zu Korrosion führen kann. Aber auch wenn ein Prozessfluss gewählt wird, bei dem das Vergüten (insbesondere beim Kaltbiegen) vor dem Schmieden erfolgt, können nachfolgend, u.a. auch im verbauten Zustand, korrosive Fluide wie z.B. Feuchtigkeit in das Innere des Stabilisators eindringen, die zu Korrosion führen kann. Aber auch bei der Vorbehandlung zum Lackieren als nachgeschaltetem Prozessfluss werden typischerweise korrosive Fluide eingesetzt, die in das Innere des Rohrstabilisators eindringen können, wenn dieser nicht fluiddicht verschlossen ist.

Es sei angemerkt, dass die Begriffe "Warmumformen" und "Warmbiegen" unterschiedliche Prozessschritte darstellen. Beim Warmumformen wird das bzw. die Blattenden hergestellt, d.h. u.a. geplättet. Das Blattende ist der Anknüpfungspunkt des Stabilisators an das Fahrwerk. Beim Warmbiegen wird die gesamte Form des Stabilisators erzeugt, d.h. die Anpassung der Form des Stabilisators an das jeweilige Kraftfahrzeug vorgenommen.

Generell umfasst der Herstellungsprozess der Rohrstabilisatoren beispielsweise u.a. folgende (Kern-) Prozessschritte: Schmieden, Biegen, Vergüten, optional Strahlen, optional Lackieren. Weiterhin ist es möglich, weitere Zwischenprozessschritte auszuführen, wie z.B. das Innenstrahlen oder das Innenkonservieren. Prinzipiell kann jedoch auf das Innenkonservieren, d.h. den Korrosionsschutz von Innen, durch das Schweißen der Blattenden verzichtet werden, da keine korrodierenden Medien in den Stabilisator eindringen können. Beispielsweise kann es vorteilhaft sein, das Innenstrahlen vor dem Schmieden durchzuführen, um eine bessere Schweißnaht zu erzielen, da der Bereich des späteren Stabilisatorblatts gereinigt ist und die Schweißnaht fehlerunanfälliger ist, d.h. die Wahrscheinlichkeit einer Undichtigkeit der Schweißnaht verringert wird. Somit erhöht sich die Prozessstabilität beim Schweißprozess. Ferner benötigt das Schweißen eines vorher gereinigten Stabilisatorblatts bzw. generell sauberen Stabilisatorblatts weniger Energie als das Schweißen eines ungereinigten Stabilisatorblatts.

Bevorzugte Ausführungsbeispiele der vorliegenden Erfindung werden nachfolgend Bezug nehmend auf die beiliegenden Zeichnungen erläutert. Es zeigen:
Fig. 1: eine Darstellung eines Rohrstabilisators mit Schweißnaht im Stabilisatorblatt in drei verschiedenen Ansichten, wobei Fig. 1a eine perspektivische Darstellung, Fig. 1b eine Seitenansicht und Fig. 1c eine Rastermikroskop Darstellung des Stabilisatorblatts im Längsschnitt zeigt;
Fig. 2: die Darstellung aus Fig. 1a und Fig. 1b, wobei Fig. 2a, Fig. 2b, Fig. 2c, Fig. 2d, Fig. 2e und Fig. 2f schematisch jeweils unterschiedliche Anordnungen von Schweißnähten zeigen;
Fig. 3: ein Flussdiagramm zur Darstellung verschiedener Prozessflüsse, wobei Fig. 3a und Fig. 3b jeweils unterschiedliche Prozessflüsse zur Herstellung des Rohrstabilisators zeigen, Fig. 3c einen Prozessfluss des Schmiedens mit dem Schweißen offenbart und Fig. 3d einen Prozessfluss für das Warmbiegen offenbart;
Fig. 4: eine schematische perspektivische Darstellung eines Rohrstabilisators.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

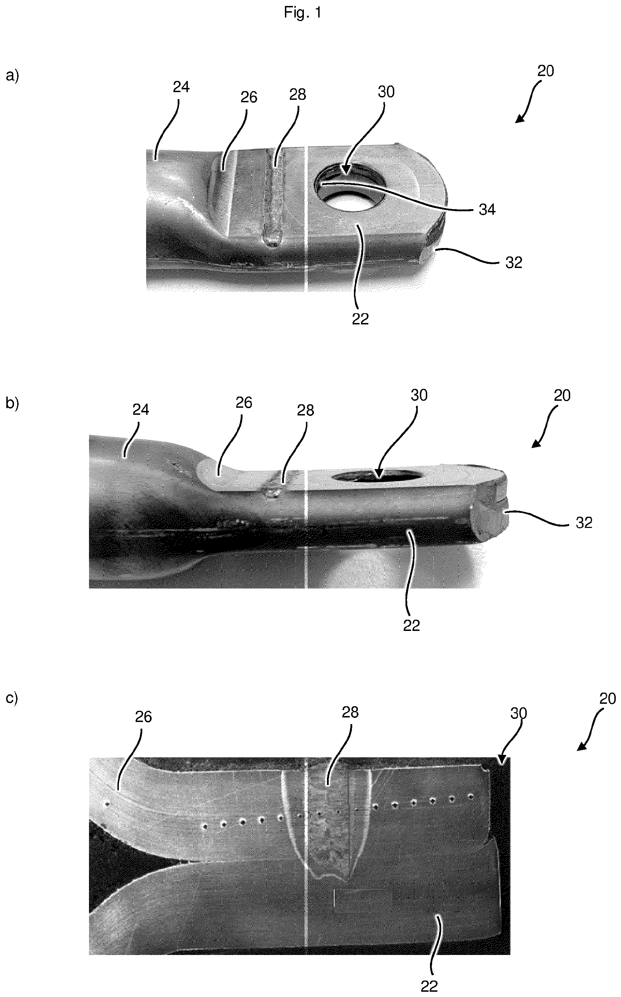

Fig. 1 zeigt in Fig. 1a, Fig. 1b und Fig. 1c jeweils verschiedene Ansichten eines Endbereichs eines Rohrstabilisators 20. Der Rohrstabilisator umfasst ein Stabilisatorblatt 22, einen Rohrabschnitt 24 und einen Übergangsbereich 26, der zwischen Stabilisatorblatt 22 und Rohrabschnitt 24 angeordnet ist. Im Bereich des Stabilisatorblatts 22, oder ergänzend oder alternativ auch im Bereich des Übergangsbereichs 26, ist eine Schweißnaht 28 gebildet, um den Rohrabschnitt gegen eindringende Feuchtigkeit zu schützen. In dem Stabilisatorblatt ist ferner ein Durchbruch 30 ausgebildet. Ferner ist an der Stirnseite 32 sowie in dem Durchbruch 30 ein kleiner Spalt 34 zwischen den beiden Blattflächen des Blattendes 22 sichtbar.

Das Blattende 22 des Rohrstabilisators 20 kann verschieden ausgestaltet sein. Neben der dargestellten gebogenen Kontur (runder Schnitt) und flachen Form kann das Stabilisatorblatt auch z.B. eine geknickt oder gebogene Form aufweisen. Die Kontur des Blattes kann ebenfalls verschiedene Ausprägungen aufweisen, beispielsweise eine eckige Kontur oder eine geschwungene, beispielsweise leicht s-förmige oder c-förmige Stirnfläche aufweisen.

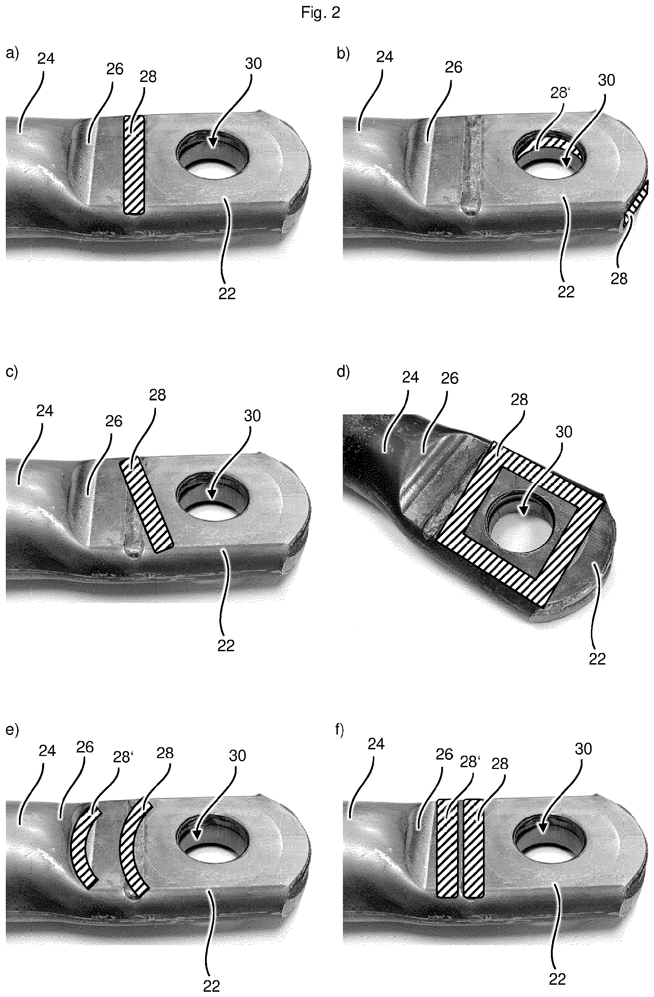

Fig. 2 zeigt basierend auf den Darstellungen aus Fig. 1a und Fig. 1b verschiedene Optionen, um die Schweißnaht 28 auszubilden. Die Schweißnähte 28 schraffiert und nur schematisch dargestellt. Fig. 2a offenbart die Schweißnaht 28 in dem Stabilisatorblatt 22 zwischen Durchbruch 30 und Übergangsbereich 26. Die Schweißnaht 28 ist lateral auf dem Stabilisatorblatt ausgeführt. Fig. 2b offenbart zwei Schweißnähte 28, 28'. Die erste Schweißnaht 28 verschließt das Stabilisatorblatt 22 kopfseitig. Die zweite Schweißnaht 28' ist lateral umlaufend innerhalb des Durchbruchs 30 angeordnet.

Fig. 2c offenbart ebenfalls wie Fig. 2a eine Schweißnaht 28 in dem Stabilisatorblatt 22 zwischen Durchbruch 30 und Übergangsbereich 26, jedoch ist die Schweißnaht 28 hier schräg geführt. Fig. 2d offenbart eine Schweißnaht 28, die aus einem geschlossenen Streckenzug von hier beispielhaft vier Strecken besteht. Somit wird der Durchbruch 30 gegenüber dem Rohrabschnitt 24 des Rohrstabilisators abgedichtet. Ferner ist darauf zu achten, dass zumindest eine Strecke des Streckenzugs die komplette Breite des Stabilisatorblatts 22 abdichtet. Dies ist in Fig. 2d durch die Schweißnaht 28 zwischen Durchbruch 30 und Übergangsbereich 26 gelöst.

Fig. 2e und Fig. 2f offenbaren jeweils eine doppelte Schweißnaht 28, 28'. In Fig. 2e ist die zweite Schweißnaht 28' im Übergangsbereich 26 angeordnet während die erste Schweißnaht 28 im Stabilisatorblatt 22 angeordnet ist. Ferner sind die Schweißnähte 28, 28' gebogen ausgeführt. Fig. 2f offenbart gerade, parallel geführte Schweißnähte 28, 28' im Stabilisatorblatt 22.

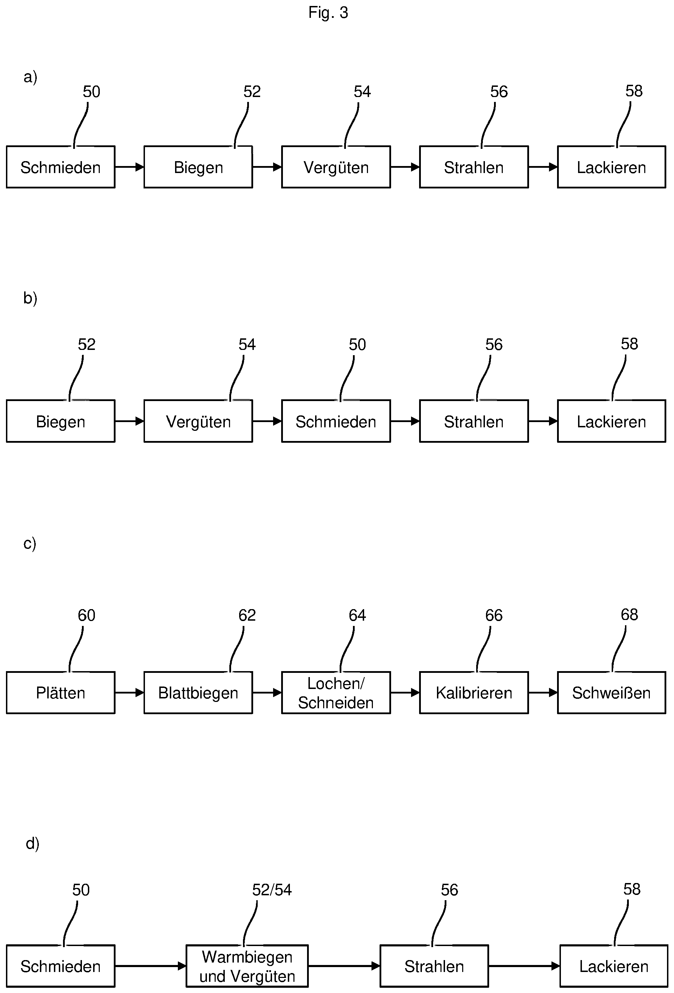

Fig. 3a und Fig. 3b offenbaren die Prozessschritte Schmieden 50, Biegen 52, Vergüten 54, Strahlen 56 und Lackieren 58. Mit den fluiddicht bzw. zumindest flüssigkeitsdicht verschlossenen, insbesondere verschweißten, Rohrstabilisatoren sind die Prozessschritte nahezu beliebig vertauschbar. Sinnvoll ist es jedoch, das Strahlen 56 und Lackieren 58 aufeinanderfolgend am Ende des Prozesses durchzuführen, um die Lackschicht zu schonen. Ferner ist das Strahlen nach 56 dem Vergüten 54 auszuführen. Weitere Einschränkungen hinsichtlich der Wahl der Reihenfolge der Prozessschritte gibt es nicht.

Fig. 3a offenbart nunmehr einen Prozessablauf, der eine schnelle Taktzeit bei der Fertigung der Rohrstabilisatoren ermöglicht. Zunächst wird ein Rohr aus Stahl bzw. Federstahl geschmiedet (Schritt 50) um ein geschmiedetes Rohr zu erhalten. Der Prozessablauf des Schmiedens ist in Fig. 3c erläutert. Anschließend wird das geschmiedete Rohr gebogen (Schritt 52), damit das Rohr die Form des Rohrstabilisators erhält. Das Biegen des Rohrs erfolgt mittels Kaltbiegen, d.h. bei einer Temperatur von maximal 150°C, typischerweise maximal 100°C, in der Regel maximal 50°C. Das geschmiedete Rohr wird in Schritt 54 vergütet, um einen vergüteten Rohrstabilisator zu erhalten. Durch das Vergüten erhält der Rohrstabilisator seine gewünschte Festigkeit. Optional erfolgt nach dem Vergüten in Schritt 56 das (Kugel-) Strahlen des vergüteten Rohrstabilisators. Durch das Kugelstrahlen werden Druckeigenspannungen in der Oberfläche eingestellt. Weiter optional wird der vergütete oder gestrahlte Rohrstabilisator lackiert. Die Lackierung verhindert beispielsweise die Korrosion des Rohrstabilisators von außen.

Fig. 3b offenbart eine zu Fig. 3a abweichende Reihenfolge der Prozessschritte. Hier wird das Rohr zunächst gebogen (Schritt 52) und anschließend vergütet. Nach dem Vergüten wird das vergütete Rohr geschmiedet. Durch das Schmieden erhält der Rohrstabilisator hier das zu einem Stabilisatorblatt geplättete Ende. Optional erfolgen auch hier anschließend die Schritte 56 und/oder 58. Die Beschreibung der Prozessschritte aus Fig. 3a gilt hier analog.

Weitere Prozessschritte können in den Prozessabläufen aus Fig. 3a und Fig. 3b je nach Kundenanforderungen bzw. technischen Anforderungen durchgeführt werden. Beispielsweise ist es möglich, vor dem Schmieden in Schritt 50 das Rohr auch von innen zu Strahlen. Somit werden auch die Druckeigenspannungen zumindest in einigen Bereichen auf der Innenoberfläche des Rohrs eingestellt.

Ferner ist es möglich, ein bereits vergütetes Rohr zu verwenden oder den Vergüteprozess entfallen zu lassen (bei geeigneter Materialwahl), so dass der Prozessschritt 54 in den Ausführungsbeispielen gemäß Fig. 3a und Fig. 3b obsolet ist.

Fig. 3c offenbart nunmehr die Prozessschritte 50 zum Schmieden des Rohrstabilisators bzw. des Stahlrohrs. Das Schmieden umfasst das Plätten (Schritt 60) eines Endes des Rohrs (oder beider Rohrenden), so dass das geschmiedete Rohr einen Rohrabschnitt, ein Stabilisatorblatt (oder zwei Stabilisatorblätter) und einen Übergangsbereich (oder zwei Übergangsbereiche) zwischen Rohrabschnitt und Stabilisatorblatt aufweist. Optional erfolgt danach in Schritt 62 das Blattbiegen. Durch das Blattbiegen kann das Stabilisatorblatt eine Form erhalte, die von der flachen (ausschließlich geplätteten) Form abweicht. In Schritt 64 erfolgt das Lochen (bzw. Erstellen des Durchbruchs). Optional wird das geplättete Ende des Rohrstabilisators noch beschnitten, um die gewünschte Kontur des Blattendes zu erhalten. Das Beschneiden kann im gleichen Prozessschritt wie das Lochen oder auch separat erfolgen.

In Schritt 66 wird das Stabilisatorblatt optional kalibriert. Beim Kalibrieren erfolgt ein erneutes gegenseitiges Pressen der Anschraubflächen an dem bereits geplätteten und gelochten Stabilisatorblatt. Dabei kommen sogenannte Kalibrierstempel zum Einsatz, welche durch das beidseitige Aufeinanderpressen die notwendigen Kundenanforderungen bzgl. Ebenheit und Parallelität an die Blattflächen sicherstellen. Somit kann ein Lösen der Schrauben durch beispielsweise Setzverhalten oder "schräger" Anbindung bei nicht ausreichender Parallelität vermieden werden. Optional wird dabei auch der beim Lochen entstehende Grat um die Bohrungsunterseite mit Hilfe von einem Konus wieder angedrückt und verringert/vermieden. In Schritt 68 erfolgt das Erstellen der Schweißnaht im Bereich des Übergangsbereichs oder des Stabilisatorblatts, um den Rohrabschnitt gegen eindringende Feuchtigkeit zu schützen. Die Schritte 62 (Blattbiegen), 64 (Lochen) und 68 (Schweißen) erfolgen demnach nach dem Plätten in Schritt 60. Das Kalibrieren erfolgt nach dem Lochen in Schritt 64.

Fig. 3d offenbart einen Prozessablauf für das Warmbiegen des Rohrstabilisators. In Schritt 50 folgt zunächst das Schmieden des (noch geraden) Rohrs, beispielsweise gemäß der in Fig. 3c beschriebenen Prozessschritte. Parallel erfolgen danach die Schritte 52 (Warmbiegen) und 54 (Vergüten). Das Warmbiegen erfolgt typischerweise oberhalb der Austenitisierungstemperatur. Das Vergüten beinhaltet das Härten im Abschreckmedium und anschließendem Anlassen nach dem Erwärmen. Es folgen die Schritte 56 (Strahlen) und 58 (Lackieren) wie bereits hinsichtlich Fig. 3a und Fig. 3b beschrieben.

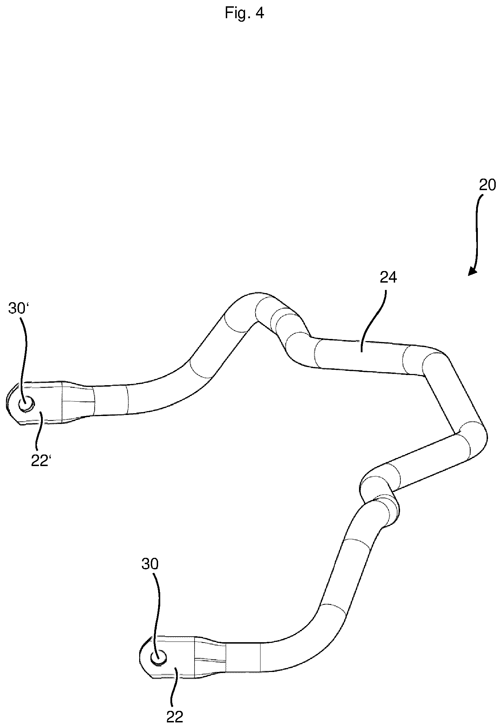

Fig. 4 zeigt eine schematische Darstellung eines Rohrstabilisator 20. Der Rohrstabilisator 20 weist an beiden Enden jeweils ein Stabilisatorblatt 22, 22' auf. Die Stabilisatorblätten 22, 22' weisen jeweils einen Durchbruch 30, 30', d.h. ein Loch, auf. Zwischen den beiden Stabilisatorblätten 22, 22' befindet sich der Rohrabschnitt 24. Der Rohrstabilisator 20 wird üblicherweise mit zwei Schellen am (Kraft-) Fahrzeug befestigt.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste:

- 20: Rohrstabilisator
- 22: Stabilisatorblatt
- 24: Rohrabschnitt
- 26: Übergangsbereich
- 28: Schweißnaht
- 30: Durchbruch
- 32: Kopfseite des Stabilisatorblatts
- 50ff: Prozessschritte

## Patentansprüche

1. Rohrstabilisator (20) mit folgenden Merkmalen:
- einem zu einem Stabilisatorblatt (22) umgeformten Rohrende, so dass der Rohrstabilisator (20) einen Rohrabschnitt (24), das Stabilisatorblatt (22) und einen Übergangsbereich (26) zwischen Rohrabschnitt (24) und Stabilisatorblatt (22) aufweist, **gekennzeichnet durch**
- eine Schweißnaht (28) im Bereich des Übergangsbereichs (26) oder des Stabilisatorblatts (22), um einen Gas- und/oder Flüssigkeitsaustausch zwischen dem Rohrabschnitt (24) und der Umgebung zu vermeiden, wobei die Schweißnaht (28) in Abwesenheit eines Schweißzusatzwerkstoffs gebildet ist.

2. Rohrstabilisator (20) gemäß Anspruch 1, wobei die Schweißnaht (28) mittels Laserschweißen gebildet ist.

3. Rohrstabilisator (20) gemäß einem der vorherigen Ansprüche, wobei die Schweißnaht (28) kopfseitig (32) auf dem Stabilisatorblatt (22) ausgeführt ist.

4. Rohrstabilisator (20) gemäß einem der vorherigen Ansprüche, wobei das Stabilisatorblatt (22) einen Durchbruch (30) aufweist, wobei der Durchbruch mittels der Schweißnaht (28) gegenüber dem Übergangsbereich (26) oder dem Rohrabschnitt (24) abgedichtet ist.

5. Rohrstabilisator (20) gemäß einem der Ansprüche 1 bis 3, wobei das Stabilisatorblatt (22) einen Durchbruch (30) aufweist, wobei der Rohrstabilisator (20) eine weitere Schweißnaht (28') aufweist, wobei die weitere Schweißnaht lateral umlaufend innerhalb des Durchbruchs (30) angeordnet ist.

6. Rohrstabilisator (20) gemäß einem der Ansprüche 1, 2 oder 4, wobei die Schweißnaht (28) lateral auf dem Stabilisatorblatt (22) oder dem Übergangsbereich (26) ausgeführt ist, wobei die Schweißnaht (28) zwischen dem Rohrabschnitt (24) und dem Durchbruch (30) angeordnet ist.

7. Verfahren zur Herstellung eines kaltgebogenen Rohrstabilisators aus einem Rohr mit folgenden Schritten:
a) Schmieden (50) des Rohrs eines vergüteten Rohrstabilisators, um ein geschmiedetes Rohr zu erhalten;
b) Biegen (52) des Rohrs oder des geschmiedeten Rohrs, um einen Rohrstabilisator zu erhalten;
c) Vergüten (54) des gebogenen Rohrs, um den vergüteten Rohrstabilisator zu erhalten;
- wobei das Schmieden (50) des Rohrs folgende Schritte umfasst:
a1) Plätten (60) eines Endes des Rohrs, so dass das geschmiedete Rohr einen Rohrabschnitt (24), ein Stabilisatorblatt (22) und einen Übergangsbereich (26) zwischen Rohrabschnitt (24) und Stabilisatorblatt (22) aufweist;
**gekennzeichnet durch** den Schritt
a2) Erstellen (68) einer Schweißnaht (28) im Bereich des Übergangsbereichs (26) oder des Stabilisatorblatts (22), um den Rohrabschnitt (24) gegen einen Flüssigkeits- und/oder Gasaustausch mit der Umgebung abzudichten.

8. Verfahren gemäß Anspruch 7, mit folgendem weiteren Schritt:
d) Strahlen (56) des vergüteten Rohrstabilisators nach den Schritten a) bis c), um einen gestrahlten Rohrstabilisator zu erhalten.

9. Verfahren gemäß Anspruch 8, mit folgendem weiteren Schritt:
e) Lackieren (58) des gestrahlten Rohrstabilisators nach Schritt d), um einen lackierten Rohrstabilisator zu erhalten.

10. Verfahren gemäß einem der Ansprüche 7 oder 8, wobei der Rohrstabilisator zu Beginn des Erstellens der Schweißnaht in Schritt a2) eine Temperatur aufweist, die zumindest 50°C höher ist, als die Umgebungstemperatur.

11. Verfahren gemäß Anspruch 10, wobei die Temperatur des Rohrstabilisators als Restwärme des Plättens in Schritt a1) im Rohrstabilisator verbleibt.

12. Verfahren gemäß einem der Ansprüche 7 bis 11, wobei das Verfahren nach dem Erstellen der Schweißnaht in Schritt a2) einen Schritt a3) vorsieht, der eine thermische Nachbehandlung zumindest eines Bereichs um die Schweißnaht umfasst.

13. Verfahren gemäß einem der Ansprüche 7 bis 12, wobei die Verfahrensschritte a) bis c) in der genannten alphabetischen Reihenfolge ausgeführt werden.

14. Verfahren gemäß einem der Ansprüche 7 bis 12, wobei die Verfahrensschritte a) bis c) in folgender Reihenfolge ausgeführt werden: b), c), a).

15. Verfahren zur Herstellung eines warmgebogenen Rohrstabilisators mit folgenden Schritten:
- a) Schmieden eines Rohrs um ein geschmiedetes Rohr zu erhalten;
- b) Erhitzen des geschmiedeten Rohrs auf eine Temperatur oberhalb der Austenitisierungstemperatur des Rohrs, um ein erhitztes Rohr zu erhalten;
- c) Biegen des erhitzten Rohrs ein gebogenes Rohr in der Form des Rohrstabilisators zu erhalten;
- d) Abschrecken des gebogenen Rohrs um ein gehärtetes, gebogenes Rohr zu erhalten;
- e) Anlassen des gehärten, gebogenen Rohrs, um den Rohrstabilisator zu erhalten;
- wobei das Schmieden (50) des Rohrs folgende Schritte umfasst:
- a1) Plätten (60) eines Endes des Rohrs, so dass das geschmiedete Rohr einen Rohrabschnitt (24), ein Stabilisatorblatt (22) und einen Übergangsbereich (26) zwischen Rohrabschnitt (24) und Stabilisatorblatt (22) aufweist; **gekennzeichnet durch** den Schritt
- a2) Erstellen (68) einer Schweißnaht (28) im Bereich des Übergangsbereichs (26) oder des Rohrblatts (22), um den Rohrabschnitt (24) gegen einen Flüssigkeits- und/oder Gasaustausch mit der Umgebung abzudichten.

## Claims

1. A tubular stabilizer (20) having the following features:
- a tube end shaped to form a stabilizer blade (22), so that the tubular stabilizer (20) has a tubular section (24), the stabilizer blade (22) and a transition region (26) between the tubular section (24) and the stabilizer blade (22), **characterized by**
- a weld seam (28) in the region of the transition region (26) or of the stabilizer blade (22) so as to avoid an exchange of gas and/or liquid between the tubular section (24) and the surroundings, wherein the weld seam (28) is formed in the absence of a filler material.

2. The tubular stabilizer (20) as claimed in claim 1, wherein the weld seam (28) is formed by means of laser welding.

3. The tubular stabilizer (20) as claimed in one of the preceding claims, wherein the weld seam (28) is formed on the stabilizer blade (22) at the head end (32).

4. The tubular stabilizer (20) as claimed in one of the preceding claims, wherein the stabilizer blade (22) has an aperture (30), wherein the aperture is sealed with respect to the transition region (26) or the tubular section (24) by means of the weld seam (28).

5. The tubular stabilizer (20) as claimed in one of claims 1 to 3, wherein the stabilizer blade (22) has an aperture (30), wherein the tubular stabilizer (20) has a further weld seam (28'), wherein the further weld seam is arranged laterally circumferentially within the aperture (30).

6. The tubular stabilizer (20) as claimed in one of claims 1, 2 and 4, wherein the weld seam (28) is formed laterally on the stabilizer blade (22) or the transition region (26), wherein the weld seam (28) is arranged between the tubular section (24) and the aperture (30).

7. A method for producing a cold-bent tubular stabilizer from a tube, said method having the following steps:
a) forging (50) the tube of a heat treated tubular stabilizer so as to obtain a forged tube;
b) bending (52) the tube or the forged tube so as to obtain a tubular stabilizer;
c) heat treating (54) the bent tube so as to obtain the heat treated tubular stabilizer;
- wherein forging (50) of the tube comprises the following steps:
a1) flattening (60) one end of the tube so that the forged tube has a tubular section (24), a stabilizer blade (22) and a transition region (26) between the tubular section (24) and the stabilizer blade (22);
**characterized by** step
a2) producing (68) a weld seam (28) in the region of the transition region (26) or of the stabilizer blade (22) so as to seal the tubular section (24) against an exchange of liquid and/or gas with the surroundings.

8. The method as claimed in claim 7, having the following further step:
d) peening (56) the heat treated tubular stabilizer after steps a) to c) so as to obtain a peened tubular stabilizer.

9. The method as claimed in claim 8, having the following further step:
e) coating (58) the peened tubular stabilizer after step d) so as to obtain a coated tubular stabilizer.

10. The method as claimed in one of claims 7 and 8, wherein, at the start of production of the weld seam in step a2), the tubular stabilizer has a temperature that is at least 50°C higher than the ambient temperature.

11. The method as claimed in claim 10, wherein the temperature of the tubular stabilizer remains in the tubular stabilizer as residual heat of the flattening in step a1).

12. The method as claimed in one of claims 7 to 11, wherein, after production of the weld seam in step a2), the method provides a step a3), which comprises thermal after-treatment at least of a region around the weld seam.

13. The method as claimed in one of claims 7 to 12, wherein method steps a) to c) are carried out in the mentioned alphabetical order.

14. The method as claimed in one of claims 7 to 12, wherein method steps a) to c) are carried out in the following order: b), c), a).

15. A method for producing a hot-bent tubular stabilizer, said method having the following steps:
- a) forging a tube so as to obtain a forged tube;
- b) heating the forged tube to a temperature above the austenitization temperature of the tube so as to obtain a heated tube;
- c) bending the heated tube so as to obtain a bent tube in the form of the tubular stabilizer;
- d) quenching the bent tube so as to obtain a hardened, bent tube;
- e) tempering the hardened, bent tube so as to obtain the tubular stabilizer;
- wherein forging (50) of the tube comprises the following steps:
- a1) flattening (60) one end of the tube so that the forged tube has a tubular section (24), a stabilizer blade (22) and a transition region (26) between the tubular section (24) and the stabilizer blade (22);
**characterized by** step
- a2) producing (68) a weld seam (28) in the region of the transition region (26) or of the tube blade (22) so as to seal the tubular section (24) against an exchange of liquid and/or gas with the surroundings.

## Revendications

1. Un stabilisateur tubulaire (20) ayant les caractéristiques suivantes :
- une extrémité de tube façonnée pour former une lame de stabilisateur (22), de sorte que le stabilisateur tubulaire (20) comporte une section tubulaire (24), la lame de stabilisateur (22) et une région de transition (26) entre la section tubulaire (24) et la lame de stabilisateur (22), **caractérisé par**
- un cordon de soudure (28) dans la région de la région de transition (26) ou de la lame de stabilisateur (22) de manière à éviter un échange de gaz et/ou de liquide entre la section tubulaire (24) et l'environnement, dans lequel le cordon de soudure (28) est formé en l'absence d'un matériau d'apport.

2. Le stabilisateur tubulaire (20) selon la revendication 1, dans lequel le cordon de soudure (28) est formé au moyen d'un soudage laser.

3. Le stabilisateur tubulaire (20) selon l'une des revendications précédentes, dans lequel le cordon de soudure (28) est formé sur la lame de stabilisateur (22) à l'extrémité de tête (32).

4. Le stabilisateur tubulaire (20) selon l'une des revendications précédentes, dans lequel la lame de stabilisateur (22) comporte une ouverture (30), dans lequel l'ouverture est étanchéifiée par rapport à la région de transition (26) ou à la section tubulaire (24) au moyen du cordon de soudure (28).

5. Le stabilisateur tubulaire (20) selon l'une des revendications 1 à 3, dans lequel la lame de stabilisateur (22) comporte une ouverture (30), dans lequel le stabilisateur tubulaire (20) comporte un autre cordon de soudure (28'), dans lequel l'autre cordon de soudure est disposé latéralement de manière circonférentielle à l'intérieur de l'ouverture (30).

6. Le stabilisateur tubulaire (20) selon l'une des revendications 1, 2 et 4, dans lequel le cordon de soudure (28) est formé latéralement sur la lame de stabilisateur (22) ou la région de transition (26), dans lequel le cordon de soudure (28) est disposé entre la section tubulaire (24) et l'ouverture (30).

7. Un procédé pour produire un stabilisateur tubulaire cintré à froid à partir d'un tube, ledit procédé comportant les étapes suivantes :
a) forgeage (50) du tube d'un stabilisateur tubulaire traité thermiquement de manière à obtenir un tube forgé ;
b) cintrage (52) du tube ou du tube forgé de manière à obtenir un stabilisateur tubulaire ;
c) traitement thermique (54) du tube cintré de manière à obtenir le stabilisateur tubulaire traité thermiquement ;
- dans lequel le forgeage (50) du tube comprend les étapes suivantes :
a1) aplatissement (60) d'une extrémité du tube de sorte que le tube forgé comporte une section tubulaire (24), une lame de stabilisateur (22) et une région de transition (26) entre la section tubulaire (24) et la lame de stabilisateur (22) ;
**caractérisé par** l'étape
a2) production (68) d'un cordon de soudure (28) dans la région de la région de transition (26) ou de la lame de stabilisateur (22) de manière à étanchéifier la section tubulaire (24) contre un échange de liquide et/ou de gaz avec l'environnement.

8. Le procédé selon la revendication 7, comportant l'étape supplémentaire suivante :
d) grenaillage (56) du stabilisateur tubulaire traité thermiquement après les étapes a) à c) de manière à obtenir un stabilisateur tubulaire grenaillé.

9. Le procédé selon la revendication 8, comportant l'étape supplémentaire suivante :
e) revêtement (58) du stabilisateur tubulaire grenaillé après l'étape d) de manière à obtenir un stabilisateur tubulaire revêtu.

10. Le procédé selon l'une des revendications 7 et 8, dans lequel, au début de la production du cordon de soudure dans l'étape a2), le stabilisateur tubulaire a une température qui est au moins 50°C plus élevée que la température ambiante.

11. Le procédé selon la revendication 10, dans lequel la température du stabilisateur tubulaire demeure dans le stabilisateur tubulaire comme chaleur résiduelle de l'aplatissement dans l'étape a1).

12. Le procédé selon l'une des revendications 7 à 11, dans lequel, après la production du cordon de soudure dans l'étape a2), le procédé prévoit une étape a3), qui comprend un post-traitement thermique au moins d'une région autour du cordon de soudure.

13. Le procédé selon l'une des revendications 7 à 12, dans lequel les étapes du procédé a) à c) sont exécutées dans l'ordre alphabétique mentionné.

14. Le procédé selon l'une des revendications 7 à 12, dans lequel les étapes du procédé a) à c) sont exécutées dans l'ordre suivant : b), c), a).

15. Un procédé pour produire un stabilisateur tubulaire cintré à chaud, ledit procédé comportant les étapes suivantes :
- a) forgeage d'un tube de manière à obtenir un tube forgé ;
- b) chauffage du tube forgé à une température supérieure à la température d'austénitisation du tube de manière à obtenir un tube chauffé ;
- c) cintrage du tube chauffé de manière à obtenir un tube cintré sous la forme du stabilisateur tubulaire ;
- d) trempe du tube cintré de manière à obtenir un tube durci, cintré ;
- e) revenu du tube durci, cintré de manière à obtenir le stabilisateur tubulaire ;
- dans lequel le forgeage (50) du tube comprend les étapes suivantes :
- a1) aplatissement (60) d'une extrémité du tube de sorte que le tube forgé comporte une section tubulaire (24), une lame de stabilisateur (22) et une région de transition (26) entre la section tubulaire (24) et la lame de stabilisateur (22) ;
**caractérisé par** l'étape
- a2) production (68) d'un cordon de soudure (28) dans la région de la région de transition (26) ou de la lame de tube (22) de manière à étanchéifier la section tubulaire (24) contre un échange de liquide et/ou de gaz avec l'environnement.
